# EUROPEAN PATENT APPLICATION

(11) **EP 3 907 805 A1**
(43) Date of publication of application: **10.11.2021**
(21) Application number: 19911890.2
(22) Date of filing: 13.12.2019
(51) Int. Cl.: H01M 10/058, H01M 2/02, H01M 2/08

(54) **BATTERY AND METHOD FOR PACKAGING SAME, AND TERMINAL**

(30) Priority: 22.01.2019 CN 201910059966
(71) Applicant: Huawei Technologies Co., Ltd., Shenzhen, Guangdong 518129 (CN)
(72) Inventor: LU, Lun, Shenzhen, Guangdong 518129 (CN); HONG, Da, Shenzhen, Guangdong 518129 (CN); LIANG, Jiahua, Shenzhen, Guangdong 518129 (CN); XU, Fan, Shenzhen, Guangdong 518129 (CN); XIE, Fengchao, Shenzhen, Guangdong 518129 (CN)
(74) Representative: Gill Jennings & Every LLP
(86) International application number: PCT/CN2019/124980
(87) International publication number: WO 2020/151392

(57) **Abstract**

Provided are a battery packaging method and a battery. The battery (100) includes an unpackaged cell (11) and a packaging film (12), where an edge of the unpackaged cell (11) includes at least one first open space (120), the first open space (120) runs through a thickness direction of the unpackaged cell (11), no unpackaged cell (11) exists in the first open space (120), the packaging film (12) encloses an enclosed space that accommodates the unpackaged cell (11), the packaging film (12) forms a first sealing part (121) in the first open space (120), the first sealing part (121) does not cover the unpackaged cell (11), the first sealing part (121) encloses a second open space (140) with a packaging film (12) on a sidewall of the first open space (120), and the first open space (120) partly overlaps the second open space (140). On a basis of maintaining battery shape flexibility, a quantity of times of cutting and edge folding operations of the packaging film is reduced in a packaging process of the battery, and a packaging technology is simplified. In addition, a large chamfer does not need to be provided at a corner of an edge open space of the unpackaged cell, thereby avoiding a loss of energy density, and reducing a difficulty in cutting an electrode plate. Further provided is a terminal that includes the battery.

## Description

This application claims priority to Chinese Patent Application No. 201910059966.5, filed with the China National Intellectual Property Administration on January 22, 2019 and entitled "BATTERY, BATTERY PACKAGING METHOD, AND TERMINAL", which is incorporated herein by reference in its entirety.

### TECHNICAL FIELD

Embodiments of the present invention relate to the field of battery packaging technologies, and in particular, to a battery, a battery packaging method, and a terminal.

### BACKGROUND

A lithium-ion battery currently used in an electronic device is usually rectangular. A rectangular battery has a fixed shape and low flexibility, and may affect a design and a layout of other components inside a device to some extent. In some application scenarios, there may be unused space, and consequently, space utilization inside the device is reduced. In contrast, an irregular-shaped battery (a shape of an electrode plate or an unpackaged cell of the battery is of an irregular shape) has high shape flexibility, good consistency, and high designability, and has a unique advantage in improving space utilization and optimizing a structural design. However, due to shape complexity, a packaging procedure of an irregular-shaped battery is inevitably more complex than that of a conventional rectangular battery. Therefore, a simpler and easier method is required to efficiently complete packaging of the irregular-shaped battery.

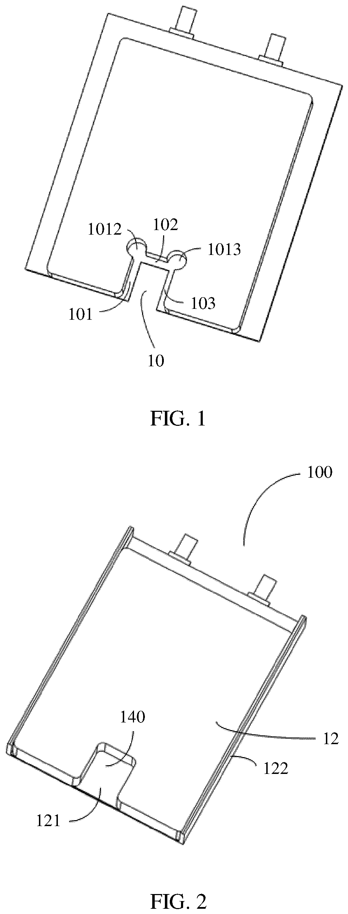

FIG. 1 is a schematic diagram of packaging an irregular-shaped battery according to the conventional technology (the battery is in an edge-unfolded state). During packaging, sealing, cutting, and edge-folding technologies of a packaging film of an edge open space 10 (an area without an unpackaged cell) are usually involved, and a plurality of extension edges 101, 102, and 103 are generated through cutting. An edge-folding operation needs to be performed on all the three extension edges. The extension edge 101 and the extension edge 102, and the extension edge 102 and the extension edge 103 intersect each other to form two intersection angles, and an edge-folding technology of an extension edge at a corner of the intersection angle is more complex. In addition, the corner is a stress concentration area. If edge-folding quality cannot be ensured, a serious battery safety problem may occur. According to a conventional-technology packaging technical solution, large chamfers 1012 and 1023 need to be provided in an unpackaged cell, so that a sufficient space is reserved for edge folding at a corner, thereby improving operability of edge folding and reducing a safety risk. However, providing large chamfers causes a waste of available space, causes a loss of battery energy density, and further increases a difficulty in cutting an electrode plate on the unpackaged cell.

### SUMMARY

In view of this, embodiments of the present invention provide a battery packaging method. A first sealing part of a packaging film that is generated in an edge open space of an unpackaged cell is retained in a packaging process, to reduce a quantity of cutting and edge-folding times, to resolve problems to some extent that a packaging procedure is cumbersome and packaging efficiency is low because a plurality of times of cutting and edge-folding operations need to be performed on a packaging film in an opening area in an existing irregular-shaped battery packaging technology, and resolve problems of a space waste, an energy density loss, and a high difficulty in cutting an electrode plate because a large chamfer needs to be provided at a corner of the opening area of the unpackaged cell due to a limitation of the existing packaging technology.

Specifically, a first aspect of the embodiments of the present invention provides a battery packaging method, including the following steps:
providing a flat packaging film, and stamping the packaging film to form a first groove used to accommodate an unpackaged cell, where an edge of the unpackaged cell is formed with at least one first open space, the first open space runs through a thickness direction of the unpackaged cell, there is no unpackaged cell in the first open space, and a shape of the first groove completely matches a shape of the unpackaged cell; folding the packaging film along a side edge of the first groove, so that the packaging film is divided into a first packaging film and a second packaging film, where the first groove is located on the first packaging film; and placing the unpackaged cell in the first groove, so that the first packaging film and the second packaging film are fitted on remaining edges of the first groove, and are sealed to obtain an enclosed space to package the unpackaged cell to obtain a battery, where the first packaging film and the second packaging film are tightly fitted with each other in the first open space or tightly fitted with each other to form a first sealing part after further hot-pressing, the first sealing part does not cover the unpackaged cell, the first sealing part encloses a second open space with a packaging film on a sidewall of the first open space, and the first open space partly overlaps the second open space.

In an implementation of the present invention, a specific operation of folding the packaging film along a side edge of the first groove, so that the packaging film is divided into a first packaging film and a second packaging film is: folding the packaging film along a side edge of the first groove that corresponds to the first open space, so that the packaging film is divided into the first packaging film and the second packaging film. This can avoid cutting, hot-pressing sealing, and edge folding operations on a packaging film on the side edge corresponding to the first open space.

Embodiments of the present invention further provide a battery packaging method, including the following steps:
providing a flat packaging film, and stamping the packaging film to form a first groove and a second groove used to accommodate an unpackaged cell, where the first groove and the second groove are provided symmetrically and adjacent to each other, at least one first open space is formed on an edge of the unpackaged cell, the first open space runs through a thickness direction of the unpackaged cell, and there is no unpackaged cell in the first open space; folding the packaging film along a side edge of the first groove or the second groove, so that the packaging film is divided into a first packaging film and a second packaging film, where the first groove is located on the first packaging film, and the second groove is located on the second packaging film; and placing the unpackaged cell in the first groove, so that the first packaging film and the second packaging film are fitted and sealed on remaining edges of the first groove, and the first groove and the second groove are aligned and closed to form an enclosed space that completely matches a shape of the unpackaged cell to package the unpackaged cell to obtain a battery, where the first packaging film and the second packaging film are tightly fitted with each other in the first open space or tightly fitted with each other to form a first sealing part after further hot-pressing, the first sealing part does not cover the unpackaged cell, the first sealing part encloses a second open space with a packaging film on a sidewall of the first open space, and the first open space partly overlaps the second open space.

In an implementation of the present invention, a specific operation of folding the packaging film along a side edge of the first groove, so that the packaging film is divided into a first packaging film and a second packaging film is: folding the packaging film along a side edge of the first groove that corresponds to the first open space, so that the packaging film is divided into the first packaging film and the second packaging film.

The battery packaging method provided in the first aspect of the embodiments of the present invention has a simple procedure, high packaging efficiency, and is suitable for packaging various batteries that have an irregular shape.

According to a second aspect, embodiments of the present invention provide a battery, including an unpackaged cell and a packaging film, where an edge of the unpackaged cell includes at least one first open space, the first open space runs through a thickness direction of the unpackaged cell, there is no unpackaged cell in the first open space, the packaging film encloses an enclosed space that accommodates the unpackaged cell, the packaging film forms a first sealing part in the first open space, the first sealing part does not cover the unpackaged cell, the first sealing part encloses a second open space with a packaging film on a sidewall of the first open space, and the first open space partly overlaps the second open space.

In an implementation of the present invention, a distance between the first sealing part and a surface of the unpackaged cell is less than or equal to a thickness of the unpackaged cell.

In an implementation of the present invention, the first sealing part is in a flat plate shape, the first sealing part is parallel to a surface of the unpackaged cell, and when projection is performed in the thickness direction of the unpackaged cell, a projection of the first sealing part partly overlaps or completely overlaps a projection of the first open space.

In an implementation of the present invention, a notch is formed in the first sealing part, and the notch is far away from the sidewall of the first open space. The setting of the notch may reserve a larger space for accommodating an electronic component.

In an implementation of the present invention, in a direction parallel to a surface of the unpackaged cell, the first sealing part covers a part or all of the first open space. A size of the first sealing part in the direction parallel to the surface of the unpackaged cell may be set based on an actual requirement.

In an implementation of the present invention, the packaging film includes a first packaging film and a second packaging film integrally folded and formed with the first packaging film.

In an implementation of the present invention, a side on which the first packaging film and the second packaging film are integrally folded and formed is of a continuous structure, and there is no obvious boundary formed by fitting the first packaging film and the second packaging film.

In an implementation of the present invention, a side on which the second packaging film and the first packaging film are integrally folded and formed corresponds to a side edge of the unpackaged cell on which the first open space is provided. This can avoid cutting, hot-pressing sealing, and edge folding operations on a packaging film on the side edge corresponding to the first open space.

In an implementation of the present invention, a chamfer is formed in the first open space, and a length of a chamfer edge of the chamfer is less than or equal to 25 mm. A relatively small length of the chamfer edge is conducive to space saving, and is also conducive to electrode plate cutting.

In an implementation of the present invention, a length of a chamfer edge of the chamfer is less than or equal to 5 mm.

In an implementation of the present invention, the first open space is rectangle-like, and the unpackaged cell is a concave unpackaged cell.

In an implementation of the present invention, the first packaging film encloses a first groove used to accommodate the unpackaged cell, a shape of the first groove completely matches a shape of the unpackaged cell, and the second packaging film is a flat film layer.

In an implementation of the present invention, the first packaging film encloses a first groove, the second packaging film encloses a second groove, and the first groove and the second groove are aligned and closed to form the enclosed space.

In an implementation of the present invention, the first sealing part is formed by tightly fitting the first packaging film and the second packaging film.

In an implementation of the present invention, the first sealing part is formed by tightly fitting the first packaging film and the second packaging film and performing further hot-pressing.

In an implementation of the present invention, the unpackaged cell and the at least one first open space form a regular three-dimensional shape.

In an implementation of the present invention, the unpackaged cell and the at least one first open space form a cuboid or a cylinder.

In an implementation of the present invention, there is further one or more third open spaces in the unpackaged cell, the third open space runs through the thickness direction of the unpackaged cell, there is no unpackaged cell in the third open space, the packaging film forms a second sealing part in the third open space, the second sealing part does not cover the unpackaged cell, the second sealing part covers a part or all of the third open space, and the second sealing part encloses a fourth open space with a packaging film on a sidewall of the third open space. The fourth open space may also be used to accommodate an electronic component.

In an implementation of the present invention, the packaging film includes a first packaging film and a second packaging film, and the second sealing part is formed by tightly fitting the first packaging film and the second packaging film.

In an implementation of the present invention, the packaging film includes a first packaging film and a second packaging film, and the second sealing part is formed by tightly fitting the first packaging film and the second packaging film and performing further hot-pressing.

In an implementation of the present invention, the unpackaged cell is a laminated cell or a winding cell.

In an implementation of the present invention, the unpackaged cell further includes a pair of tabs disposed on a same side of the unpackaged cell, and the tabs are partly exposed on the packaging film.

In an implementation of the present invention, the tabs are located on a side edge of the unpackaged cell on which the first open space is provided.

In an implementation of the present invention, the tabs are located on a side edge of the unpackaged cell on which the first open space is not provided.

According to the battery provided in the second aspect of the embodiments of the present invention, on a basis of maintaining battery shape flexibility, the first sealing part of the packaging film that is generated in an edge open space is retained in a battery packaging process, thereby greatly reducing a quantity of times of cutting and edge folding operations of the packaging film in an entire packaging process, simplifying a packaging technology, and improving packaging efficiency. In addition, a large chamfer does not need to be provided at a corner of the first open space, thereby optimizing a cell structural design, avoiding a loss of energy density, and reducing a difficulty in cutting an electrode plate.

A third aspect of the embodiments of the present invention provides a terminal, including a housing, and a display module, an electronic component module, and a battery that are accommodated in the housing, where the battery supplies power to the display module and the electronic component module, and the battery is the battery provided in the second aspect of the present invention. In an implementation of the present invention, an electronic component is disposed in the second open space. According to the terminal provided in this embodiment of the present invention, because the battery provided in the second aspect of the embodiments of the present invention is used, an internal space of a terminal device that is occupied by the battery is small, and the second open space can be used to place another electronic component, thereby further improving space utilization inside the device.

### BRIEF DESCRIPTION OF DRAWINGS

FIG. 1 is a schematic diagram of packaging an irregular-shaped battery according to the conventional technology;
FIG. 2 is a schematic structural diagram of a battery according to an implementation of the present invention;
FIG. 3 is a schematic structural diagram of an unpackaged cell in the battery shown in FIG. 2;
FIG. 4 is a schematic structural diagram of a battery according to another implementation of the present invention;
FIG. 5 is a schematic design diagram of a first open space according to another implementation of the present invention;
FIG. 6 is a schematic design diagram of a first open space according to another implementation of the present invention;
FIG. 7 is a schematic design diagram of a first open space according to another implementation of the present invention;
FIG. 8 is a schematic design diagram of a first open space and a third open space according to another implementation of the present invention; and
FIG. 9A to FIG. 9F are schematic diagrams of a battery packaging process according to an implementation of the present invention.

### DESCRIPTION OF EMBODIMENTS

The following describes the embodiments of the present invention with reference to the accompanying drawings in the embodiments of the present invention.

In an existing irregular-shaped battery packaging process, a plurality of times of sealing, cutting, and edge folding operations on a packaging film in an edge open space of an irregular-shaped unpackaged cell are usually involved, and a large chamfer needs to be provided at a corner of the unpackaged cell, to reserve a sufficient space for edge folding at a corner of the edge open space, and improve operability of edge folding and reduce a safety risk. However, providing the large chamfer causes a waste of an available space of the unpackaged cell, causes a loss of battery energy density, and further increases a difficulty in cutting an electrode plate. To resolve this problem, embodiments of the present invention provide a battery packaging method and a battery. A first sealing part of a packaging film that is generated in edge open space is retained in a packaging process, to reduce a quantity of times of cutting and edge folding operations on the packaging film.

In the present invention, the unpackaged cell has an irregular three-dimensional shape, and may be any irregular three-dimensional shape, including a non-cuboid shape, a non-cylinder shape, or the like. An edge of the unpackaged cell has an edge recess, where a first open space is formed on the edge of the unpackaged cell, and runs through an edge recess space in a thickness direction of the unpackaged cell, and there is no unpackaged cell in the first open space. The unpackaged cell includes a positive electrode plate, a negative electrode plate, and an isolation film used to isolate the positive electrode plate from the negative electrode plate. The unpackaged cell is packaged by using a packaging film and injected with electrolyte to obtain a battery. The first open space is defined by a sidewall at the edge recess of the unpackaged cell, extension surfaces of two opposite surfaces of the unpackaged cell, and an extension surface of a side surface of the unpackaged cell on a side on which the edge recess is located. A second open space is defined by a packaging film on the sidewall at the edge recess of the unpackaged cell, extension surfaces of packaging films on the two opposite surfaces of the unpackaged cell, a first sealing part, and an extension surface of a packaging film on the side surface of the unpackaged cell on the side on which the edge recess is located.

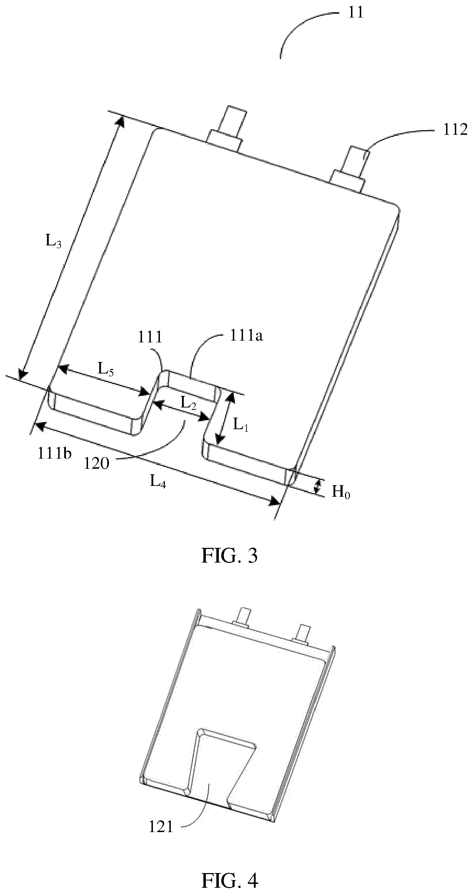

Specifically, with reference to FIG. 2 and FIG. 3, an embodiment of the present invention provides a battery 100, including an unpackaged cell 11 and a packaging film 12. An edge of the unpackaged cell 11 includes at least one first open space 120, the first open space 120 runs through a thickness direction of the unpackaged cell, there is no unpackaged cell in the first open space 120, the packaging film 12 encloses an enclosed space that accommodates the unpackaged cell 11, the unpackaged cell 11 is accommodated in the enclosed space, the packaging film 12 forms a first sealing part 121 in the first open space 120, the first sealing part 121 encloses a second open space 140 with a packaging film on a sidewall of the first open space 120, and the first open space 120 partly overlaps the second open space 140.

In an implementation of the present invention, a distance between the first sealing part 121 and a surface of the unpackaged cell 11 is less than or equal to a thickness of the unpackaged cell 11. The first sealing part 121 may be disposed near a side surface of the unpackaged cell 11, or may be disposed at a middle location, in the thickness direction of the unpackaged cell 11, on a sidewall enclosing the first open space 120.

In an implementation of the present invention, the first sealing part 121 is in a flat plate shape, the first sealing part 121 is parallel to a surface of the unpackaged cell 11, and when projection is performed on a plane on which the surface of the unpackaged cell 11 is located, a projection of the first sealing part 121 partly overlaps or completely overlaps a projection of the first open space 120.

In an implementation of the present invention, in a direction parallel to a surface of the unpackaged cell 11, the first sealing part 121 covers a part or all of the first open space 120. When the first sealing part 121 covers a part of the first open space 120, a notch is formed in the first sealing part 121, and the notch is far away from the edge of the unpackaged cell 11, that is, away from the sidewall of the first open space 120. The notch is located on an edge of the first sealing part 121, a shape and a quantity of the notch are not limited, and providing the notch may release a larger space to accommodate an electronic component.

In an implementation of the present invention, the first sealing part 121 is connected to the packaging film on the sidewall of the first open space 120.

In an implementation of the present invention, the packaging film 11 includes a first packaging film and a second packaging film, and the first packaging film and the second packaging film jointly form the enclosed space. In a specific implementation of the present invention, the second packaging film and the first packaging film are integrally folded and formed. A side on which the second packaging film and the first packaging film are integrally folded and formed corresponds to a side edge of the unpackaged cell 11 on which the first open space 120 is provided. That is, when the second packaging film and the first packaging film are integrally folded and formed, folding is performed along the side edge of the unpackaged cell 11 on which the first open space 120 is provided. A side on which the first packaging film and the second packaging film are integrally folded and formed is of a continuous structure, and there is no obvious boundary formed by fitting the first packaging film and the second packaging film.

In an implementation of the present invention, the first packaging film and the second packaging film may be existing commonly used aluminum plastic composite films. Specifically, the aluminum plastic composite film may include a polypropylene layer, an aluminum layer, and a nylon layer that are sequentially laminated, where the nylon layer is located at an outermost layer, and a thickness of a single-layer aluminum plastic composite film is 50 µm to 100 µm. The first packaging film and the second packaging film respectively cover a first surface and a second surface on two opposite sides of the unpackaged cell. For example, the first packaging film covers the first surface of the unpackaged cell 11, the second packaging film covers the second surface of the unpackaged cell 11, and the first packaging film and the second packaging film are sealed and fitted on a peripheral edge of the unpackaged cell 11, to implement packaging of the unpackaged cell.

In an implementation of the present invention, the first sealing part 121 is formed by tightly fitting the first packaging film and the second packaging film. That is, a thickness of the first sealing part 121 is equal to a sum of a thickness of the first packaging film and a thickness of the second packaging film.

In another implementation of the present invention, the first sealing part 121 is formed by tightly fitting the first packaging film and the second packaging film and performing further hot-pressing, where the hot-pressing may be hot-pressing on a local area, or may be hot-pressing on an entire area. After hot-pressing, the thickness of the first sealing part 121 is less than the sum of the thickness of the first packaging film and the thickness of the second packaging film. After hot-pressing, a better sealing structure can be formed, and the thickness of the packaging film can be further reduced, thereby increasing an available space.

In an implementation of the present invention, the thickness of the first sealing part 121 is 20 µm to 300 µm, and further, the thickness of the first sealing part 121 is 50 µm to 200 µm.

In a specific implementation of the present invention, the first packaging film encloses a first groove used to accommodate the unpackaged cell, a shape of the first groove completely matches the unpackaged cell, and the second packaging film is a flat film layer.

In another specific implementation of the present invention, the first packaging film encloses a first groove, the second packaging film encloses a second groove, and the first groove and the second groove are aligned and closed to form the enclosed space.

In an implementation of the present invention, when there are a plurality of first open spaces 120, a plurality of first sealing parts 121 correspondingly exist. The sidewall of the first open space 120 refers to an unpackaged cell side edge enclosing the first open space 120.

In an implementation of the present invention, a shape of the enclosed space completely matches a shape of the unpackaged cell 11.

In an implementation of the present invention, the unpackaged cell 11 and the at least one first open space 120 may form a regular three-dimensional shape, and a specific shape of the regular three-dimensional shape is not limited. In an embodiment of the present invention, the unpackaged cell 11 and the at least one first open space 120 form a cuboid. In another embodiment of the present invention, the unpackaged cell 11 and the at least one first open space 120 may alternatively form a cylinder or another regular three-dimensional shape.

In an implementation of the present invention, only one first open space 120 or a plurality of first open spaces 120 may be provided on the peripheral edge of the unpackaged cell 11. The plurality of first open spaces 120 may be provided on a same side of the unpackaged cell 11, or may be provided on different sides of the unpackaged cell 11. In an implementation of the present invention, a specific shape of the first open space 120 is not limited, and may be a regular or irregular shape, such as a rectangle, a rectangle-like shape, a trapezoid, a circle, or a semicircle. When a plurality of first open spaces 120 are provided, the plurality of first open spaces 120 may be of a same shape, or may be of different shapes. A size and a location of the first open space 120 may be flexibly set based on an actual requirement.

As shown in FIG. 3, in an implementation of the present invention, the first open space 120 is rectangle-like, the unpackaged cell 11 is a concave unpackaged cell, the packaging film 12 forms the first sealing part 121 in the first open space 120, a projection of the first sealing part 121 on a plane on which a surface of the unpackaged cell 11 is located is rectangle-like, and the projection of the first sealing part 121 on the plane on which the surface of the unpackaged cell 11 is located completely overlaps a projection of the first open space on the plane on which the surface of the unpackaged cell 11 is located. Optionally, a length L₁ of the first open space 120 is less than a total length L₃ of the unpackaged cell 11, a width L₂ of the first open space 120 is less than a total width L₄ of the unpackaged cell 11, a height of the first open space 120 is a thickness H₀ of the unpackaged cell, and a distance L₅ between a left edge of the first open space 120 and a left edge of the unpackaged cell 11 is less than (L₄―L₂). To ensure that the battery has a relatively strong capability of resisting an external force and a capability of resisting dropping, a preferred length range of the first open space 120 is L₁ < 2/3L₃, and a preferred width range of the first open space 120 is L₂ < 2/3L₄.

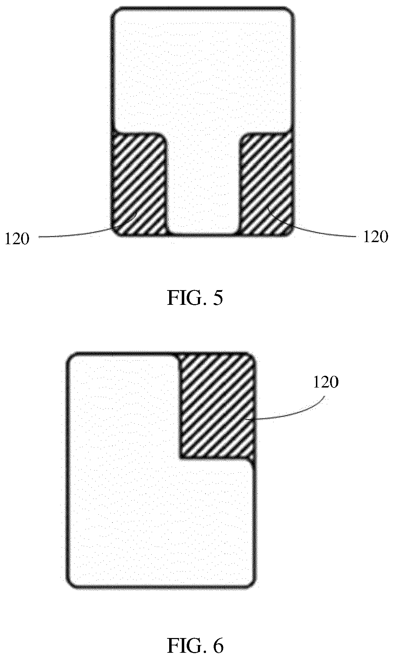

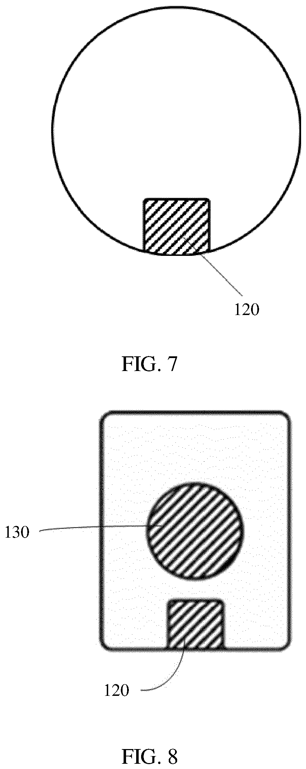

As shown in FIG. 4, in another implementation of the present invention, the unpackaged cell has a trapezoidal first open space, the unpackaged cell and the first open space form a cuboid, and the packaging film forms a trapezoidal first sealing part 121 in the first open space. As shown in FIG. 5, in another implementation of the present invention, the unpackaged cell has two rectangle-like first open spaces 120 that are respectively disposed on two opposite sides of the unpackaged cell, and the unpackaged cell and the first open spaces form a cuboid. As shown in FIG. 6, in another implementation of the present invention, the unpackaged cell has a rectangle-like first open space 120, and the unpackaged cell and the first open space form a cuboid. As shown in FIG. 7, in another implementation of the present invention, the unpackaged cell has a rectangle-like first open space 120, and the unpackaged cell and the first open space form a cylinder.

In an implementation of the present invention, in FIG. 3, a chamfer is formed in the first open space 120, a shape of the chamfer is the same as that of a chamfer of the unpackaged cell, and a length of a chamfer edge 111 of the chamfer is less than or equal to 25 mm. Further, the length of the chamfer edge 111 of the chamfer is less than or equal to 5 mm. Specifically, when a sidewall enclosing the first open space 120 include two intersecting side edges 111a and 111b, the two intersecting side edges 111a and 111b form a chamfer, one end of the chamfer edge 111 intersects the side edge 111a, and the other end of the chamfer edge 111 intersects the side edge 111b. A specific form of the chamfer is not limited, and may be a round chamfer (the chamfer edge is a circular arc edge) or an oblique chamfer (the chamfer edge is a straight edge). In another implementation, the chamfer edge 111 may alternatively be formed by a plurality of edges. When the chamfer is a round chamfer, the length of the chamfer edge 111 is a length of a circular arc edge, and when the chamfer is an oblique chamfer, the length of the chamfer edge 111 is a length of a straight edge.

In an implementation of the present invention, as shown in FIG. 8, one or more third open spaces 130 are formed in the unpackaged cell 11, the third open space 130 runs through the thickness direction of the unpackaged cell 11, there is no unpackaged cell in the third open space 130, the packaging film 12 forms a second sealing part in the third open space 130, the second sealing part does not cover the unpackaged cell, in the direction parallel to the surface of the unpackaged cell 11, the second sealing part covers a part or all of the third open space 130, and the second sealing part encloses a fourth open space with a packaging film on a sidewall of the third open space 130. One or more third open spaces 130 may be provided. A specific shape of the third open space 130 is not limited, and may be a regular or irregular shape, such as a rectangle, a trapezoid, a circle, or a semicircle. When a plurality of third open spaces 130 are provided, the plurality of third open spaces 130 may be of a same shape, or may be of different shapes. A size of the third open space 130 may be set based on an actual requirement.

In an implementation of the present invention, the packaging film at the second sealing part may be formed by tightly fitting the first packaging film and the second packaging film, or may be formed by tightly fitting the first packaging film and the second packaging film and performing further hot-pressing, where the hot-pressing may be hot-pressing on a partial area or an entire area.

In an implementation of the present invention, the second sealing part is in a flat plate shape, the second sealing part is parallel to the surface of the unpackaged cell 11, and when projection is performed on the plane on which the surface of the unpackaged cell 11 is located, a projection of the second sealing part completely overlaps a projection of the third open space 130.

Refer to FIG. 2. In an implementation of the present invention, the packaging film 12 further includes a folded edge 122 disposed on an edge of the unpackaged cell 11, where the folded edge 122 is located on an edge of the unpackaged cell 11 on which the first open space 120 is not provided, and the folded edge 122 is formed by folding the first packaging film and the second packaging film along the edge of the unpackaged cell 11 after fitting the first packaging film and the second packaging film and performing further hot-pressing. Because the first packaging film and the first packaging film are integrally folded and formed, in FIG. 2, on an end portion of the folded edge close to a side on which the packaging films are integrally folded and formed, there is no obvious boundary formed by fitting the first packaging film and the second packaging film.

In an implementation of the present invention, the unpackaged cell 11 may be a laminated cell or a winding cell. Specifically, the unpackaged cell 11 may be formed by using a positive electrode plate, a negative electrode plate, and an isolation film in a lamination or coiling manner. In an implementation of the present invention, neither the first open space 120 nor the third open space 130 includes the positive electrode plate, the negative electrode plate, and the isolation film. As shown in FIG. 3, in an implementation of the present invention, the unpackaged cell 11 further includes a pair of tabs 112, and the tabs 112 are partly exposed outside the packaging film 12. The tabs 112 include a positive tab and a negative tab, and the positive tab and the negative tab may be disposed on a same side or different sides of the unpackaged cell 11. The tabs 112 may be disposed on a side edge of the unpackaged cell 11 on which the first open space is provided, or may be disposed on a side edge of the unpackaged cell 11 on which the first open space is not provided.

According to the battery provided in the embodiments of the present invention, on a basis of maintaining battery shape flexibility, the first sealing part of the packaging film that is generated in an edge open space of an unpackaged cell is retained in a battery packaging process, thereby greatly reducing a quantity of times of cutting and edge folding operations of the packaging film in an entire packaging process, simplifying a packaging technology, and improving packaging efficiency. In addition, a large chamfer does not need to be provided at a corner of the first open space of the unpackaged cell, thereby optimizing a structural design of the unpackaged cell, avoiding a loss of energy density, and reducing a difficulty in cutting an electrode plate.

Correspondingly, an embodiment of the present invention further provides a packaging method for the foregoing battery, including the following steps:

S110. Provide a flat packaging film, and stamp the packaging film to form a first groove used to accommodate an unpackaged cell, where an edge of the unpackaged cell is formed with at least one first open space, the first open space runs through a thickness direction of the unpackaged cell, there is no unpackaged cell in the first open space, and a shape of the first groove completely matches a shape of the unpackaged cell.

S120. Fold the packaging film along a side edge of the first groove, so that the packaging film is divided into a first packaging film and a second packaging film, where the first groove is located on the first packaging film.

S130. Place the unpackaged cell in the first groove, so that the first packaging film and the second packaging film are fitted on remaining edges of the first groove, and are sealed to obtain an enclosed space to package the unpackaged cell to obtain a battery, where the first packaging film and the second packaging film are tightly fitted with each other in the first open space or tightly fitted with each other to form a first sealing part after further hot-pressing, the first sealing part does not cover the unpackaged cell, the first sealing part encloses a second open space with a packaging film on a sidewall of the first open space, and the first open space partly overlaps the second open space.

In an implementation of the present invention, a specific operation of folding the packaging film along a side edge of the first groove, so that the packaging film is divided into a first packaging film and a second packaging film is: folding the packaging film along a side edge of the first groove that corresponds to the first open space, so that the packaging film is divided into the first packaging film and the second packaging film.

An embodiment of the present invention further provides a packaging method for the foregoing battery, including the following steps:

S210. Provide a flat packaging film, and stamp the packaging film to form a first groove and a second groove used to accommodate an unpackaged cell, where the first groove and the second groove are provided symmetrically and adjacent to each other, at least one first open space is formed on an edge of the unpackaged cell, the first open space runs through a thickness direction of the unpackaged cell, and there is no unpackaged cell in the first open space.

S220. Fold the packaging film along a side edge of the first groove or the second groove, so that the packaging film is divided into a first packaging film and a second packaging film, where the first groove is located on the first packaging film, and the second groove is located on the second packaging film.

S230. Place the unpackaged cell in the first groove, so that the first packaging film and the second packaging film are fitted and sealed on remaining edges of the first groove, and the first groove and the second groove are aligned and closed to form an enclosed space that completely matches a shape of the unpackaged cell to package the unpackaged cell to obtain a battery, where the first packaging film and the second packaging film are tightly fitted with each other in the first open space or tightly fitted with each other to form a first sealing part after further hot-pressing, the first sealing part does not cover the unpackaged cell, the first sealing part encloses a second open space with a packaging film on a sidewall of the first open space, and the first open space partly overlaps the second open space.

In an implementation of the present invention, a specific operation of folding the packaging film along a side edge of the first groove, so that the packaging film is divided into a first packaging film and a second packaging film is: folding the packaging film along a side edge of the first groove that corresponds to the first open space, so that the packaging film is divided into the first packaging film and the second packaging film.

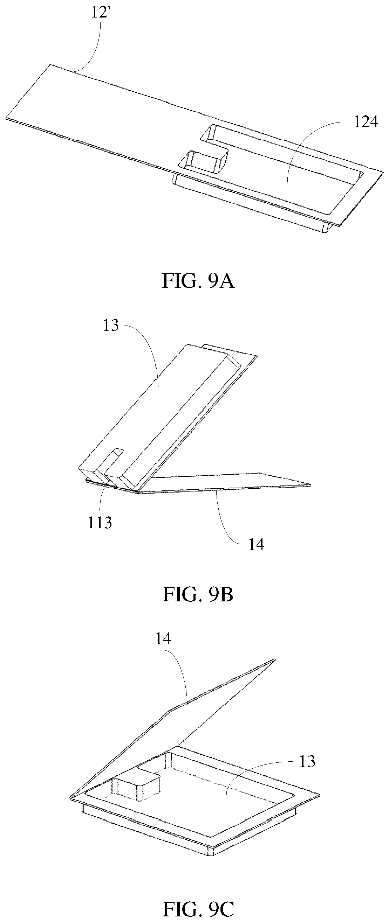

Refer to FIG. 9A to FIG. 9F. In a specific embodiment of the present invention, a packaging method for the foregoing battery includes the following steps:

S101. Provide a flat packaging film 12' and stamp the flat packaging film 12' to form a first groove 124 used to accommodate an unpackaged cell 11, where a shape of the first groove 124 is exactly the same as a shape of the unpackaged cell 11.

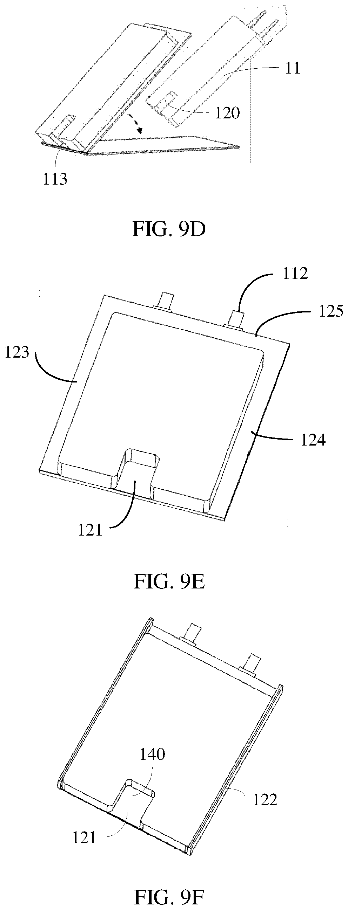

In an implementation of the present invention, only the first groove 124 may be stamped on the flat packaging film 12', or the first groove 124 and a second groove that are symmetrically disposed may be stamped. FIG. 9A is a schematic structural diagram of a packaging film 12' after stamping according to an implementation of the present invention. As shown in FIG. 9A, in this implementation, only a first groove 124 is stamped on the packaging film 12'. After stamping, an area outside the first groove 124 of the packaging film 12' remains flat. In an implementation of the present invention, the packaging film 12' may be an existing commonly used aluminum plastic composite film. Refer to FIG. 9D. At least one first open space 120 without the unpackaged cell is formed on an edge of the unpackaged cell 11, and the unpackaged cell 11 and the at least one first open space 120 form a cuboid.

S102. After a stamping procedure ends, fold the packaging film 12' along a side edge of the first groove 124, so that the packaging film 12' is bent into a U shape, as shown in FIG. 9B and FIG. 9C. The bent packaging film 12' may be divided into two parts: an upper part and a lower part. A folding line is used as a boundary line, a packaging film part that includes the first groove 124 is defined as a first packaging film 13, and a flat part without the groove is defined as a second packaging film 14.

In an implementation of the present invention, for ease of operation, as shown in FIG. 9B, a folding operation may be performed along a side edge 113 corresponding to the first open space 120, so that the packaging film 12' is divided into the first packaging film 13 and the second packaging film 14. This can avoid cutting, hot-pressing sealing, and edge folding operations on a packaging film on the side edge 113 corresponding to the first open space 120. Certainly, to obtain a better sealing effect, and reduce a thickness of the packaging film to increase an available space, a hot-pressing operation may alternatively be further performed on a local area of the first packaging film 13 and the second packaging film 14 that are mutually fitted in the first open space 120, or a hot-pressing operation may be performed on an entire area of the first packaging film 13 and the second packaging film 14.

S103. After the packaging film 12' is bent, as shown in FIG. 9D, place the unpackaged cell 11 in the first groove 124, and then continue to fold the first packaging film and the second packaging film along a folding line until the first packaging film 13 and the second packaging film 14 are completely fitted and closed. As shown in FIG. 9E, after the first packaging film 13 and the second packaging film 14 are completely closed, flat areas of the first packaging film 13 and the second packaging film 14 are fitted to each other to form extension edges. A body of the unpackaged cell 11 is wrapped in the first groove 124 of the packaging film. A part of a tab sealant and tabs 112 are exposed outside the packaging film. The first packaging film 13 and the second packaging film 14 are fitted to form a left edge extension edge 123, a right edge extension edge 124, an upper edge extension edge 125, and a first sealing part 121. Each extension edge and the first sealing part are formed by fitting two layers of upper and lower packaging films. The left edge extension edge 123, the right edge extension edge 124, and the upper edge extension edge 125 are conventional extension edges generated during packaging. In addition, after the packaging film is closed, the first sealing part 121 is further formed at a corresponding location of the first open space 120. A sealing operation then needs to be performed on the left edge extension edge 123 and the upper edge extension edge 125 of the packaging film. If the packaging film uses an aluminum plastic composite film, a hot-pressing method is usually used for sealing. Specifically, inner polypropylene layers of upper and lower aluminum plastic composite films on the extension edges are melted through heating, and then the two opposite polypropylene layers are fused to each other by applying pressure. After being cooled to a room temperature, the polypropylene layers solidify again, and the two layers of aluminum plastic composite films on the extension edges are sealed together. After sealing of the left edge extension edge 123 and the upper edge extension edge 125 is completed, a battery needs to experience conventional baking, liquid injection, formation, and degassing procedures, and then the right edge extension edge 124 is sealed by using a same sealing method. For the first sealing part 121, because the first sealing part 121 is in a sealed state, and upper lower layers of packaging films at this area can be ensured to be tightly fitted through vacuum air pumping during the degassing procedure of the battery, a sealing operation does not need to be performed on the first sealing part 121. To further ensure a sealing effect, a sealing operation may alternatively be performed on a partial area or an entire area of the first sealing part 121. A thickness of the first sealing part 121 formed after sealing is less than a sum of a thickness of the first packaging film and a thickness of the second packaging film. After sealing of the extension edges is completed, the left edge extension edge 123 and the right edge extension edge 124 are cut to a proper width value, and the width value is less than or equal to a total thickness of the battery. Finally, the left edge extension edge 123 is folded clockwise along a right edge line of the left edge extension edge 123, and the right edge extension edge 124 is folded counterclockwise along a left edge line of the right edge extension edge 124, so that the left and right edge extension edges are fitted with two side surfaces of the first groove 124 of the packaging film to form a folded edge 122, that is, complete entire battery packaging, to obtain a battery shown in FIG. 9F. In this specific implementation of the present invention, an edge folding operation is performed only on the left edge extension edge 123 and the right edge extension edge 124 in the entire packaging procedure, and each corner of the unpackaged cell does not involve the edge folding operation. Therefore, a large chamfer does not need to be disposed. In addition, the thickness of the first sealing part 121 is relatively small, so that the battery forms a second open space 140 at a corresponding location of the first open space 120, and the second open space 140 may be used to place another electronic component.

Certainly, in another embodiment of the present invention, to reserve a larger space in the first open space 120 of the unpackaged cell 11 to accommodate the electronic component, a part of the first sealing part 121 may be cut off to form a notch. The first sealing part 121 after cutting partly covers the first open space 120 in a direction parallel to a surface of the unpackaged cell 11. To ensure a sealing effect, a distance is reserved between a cut line and an edge of the unpackaged cell 11 during cutting.

The foregoing packaging method provided in the embodiments of the present invention has a simple procedure, high packaging efficiency, and is suitable for packaging various irregular-shaped batteries.

An embodiment of the present invention further provides a terminal, including a housing, and a display module, an electronic component module, and a battery that are accommodated in the housing, where the battery supplies power to the display module and the electronic component module, and the battery is the foregoing battery provided in the embodiment of the present invention. In an implementation of the present invention, an electronic component is disposed in the second open space.

According to the terminal provided in this embodiment of the present invention, because an internal space of a terminal device that is occupied by a used battery is small, a second open space is formed at a corresponding location of a first open space of an unpackaged cell, and the second open space may be used to place another electronic component, thereby further improving space utilization inside the device.

## Claims

1. A battery packaging method, comprising the following steps:
providing a flat packaging film, and stamping the packaging film to form a first groove used to accommodate an unpackaged cell, wherein an edge of the unpackaged cell is formed with at least one first open space, the first open space runs through a thickness direction of the unpackaged cell, there is no unpackaged cell in the first open space, and a shape of the first groove completely matches a shape of the unpackaged cell;
folding the packaging film along a side edge of the first groove, so that the packaging film is divided into a first packaging film and a second packaging film, wherein the first groove is located on the first packaging film; and
placing the unpackaged cell in the first groove, so that the first packaging film and the second packaging film are fitted on remaining edges of the first groove, and are sealed to obtain an enclosed space to package the unpackaged cell to obtain a battery, wherein the first packaging film and the second packaging film are tightly fitted with each other in the first open space or tightly fitted with each other to form a first sealing part after further hot-pressing, the first sealing part does not cover the unpackaged cell, the first sealing part encloses a second open space with a packaging film on a sidewall of the first open space, and the first open space partly overlaps the second open space.

2. The battery packaging method according to claim 1, wherein a specific operation of folding the packaging film along a side edge of the first groove, so that the packaging film is divided into a first packaging film and a second packaging film is: folding the packaging film along a side edge of the first groove that corresponds to the first open space, so that the packaging film is divided into the first packaging film and the second packaging film.

3. A battery packaging method, comprising the following steps:
providing a flat packaging film, and stamping the packaging film to form a first groove and a second groove used to accommodate an unpackaged cell, wherein the first groove and the second groove are provided symmetrically and adjacent to each other, at least one first open space is formed on an edge of the unpackaged cell, the first open space runs through a thickness direction of the unpackaged cell, and there is no unpackaged cell in the first open space;
folding the packaging film along a side edge of the first groove or the second groove, so that the packaging film is divided into a first packaging film and a second packaging film, wherein the first groove is located on the first packaging film, and the second groove is located on the second packaging film; and
placing the unpackaged cell in the first groove, so that the first packaging film and the second packaging film are fitted and sealed on remaining edges of the first groove, and the first groove and the second groove are aligned and closed to form an enclosed space that completely matches a shape of the unpackaged cell to package the unpackaged cell to obtain a battery, wherein the first packaging film and the second packaging film are tightly fitted with each other in the first open space or tightly fitted with each other to form a first sealing part after further hot-pressing, the first sealing part does not cover the unpackaged cell, the first sealing part encloses a second open space with a packaging film on a sidewall of the first open space, and the first open space partly overlaps the second open space.

4. The battery packaging method according to claim 3, wherein a specific operation of folding the packaging film along a side edge of the first groove, so that the packaging film is divided into a first packaging film and a second packaging film is: folding the packaging film along a side edge of the first groove that corresponds to the first open space, so that the packaging film is divided into the first packaging film and the second packaging film.

5. A battery, comprising an unpackaged cell and a packaging film, wherein an edge of the unpackaged cell comprises at least one first open space, the first open space runs through a thickness direction of the unpackaged cell, there is no unpackaged cell in the first open space, the packaging film encloses an enclosed space that accommodates the unpackaged cell, the packaging film forms a first sealing part in the first open space, the first sealing part does not cover the unpackaged cell, the first sealing part encloses a second open space with a packaging film on a sidewall of the first open space, and the first open space partly overlaps the second open space.

6. The battery according to claim 5, wherein a distance between the first sealing part and a surface of the unpackaged cell is less than or equal to a thickness of the unpackaged cell.

7. The battery according to claim 5, wherein the first sealing part is in a flat plate shape, the first sealing part is parallel to a surface of the unpackaged cell, and when projection is performed on a plane on which the surface of the unpackaged cell is located, a projection of the first sealing part partly overlaps or completely overlaps a projection of the first open space.

8. The battery according to claim 5, wherein a notch is formed in the first sealing part, and the notch is far away from the sidewall of the first open space.

9. The battery according to claim 5, wherein in a direction parallel to a surface of the unpackaged cell, the first sealing part covers a part or all of the first open space.

10. The battery according to claim 5, wherein the packaging film comprises a first packaging film and a second packaging film integrally folded and formed with the first packaging film.

11. The battery according to claim 10, wherein a side on which the first packaging film and the second packaging film are integrally folded and formed is of a continuous structure, and there is no obvious boundary formed by fitting the first packaging film and the second packaging film.

12. The battery according to claim 10, wherein a side on which the second packaging film and the first packaging film are integrally folded and formed corresponds to a side edge of the unpackaged cell on which the first open space is provided.

13. The battery according to claim 5, wherein a chamfer is formed in the first open space, and a length of a chamfer edge of the chamfer is less than or equal to 25 mm.

14. The battery according to claim 5, wherein a chamfer is formed in the first open space, and a length of a chamfer edge of the chamfer is less than or equal to 5 mm.

15. The battery according to claim 5, wherein the first open space is rectangle-like, and the unpackaged cell is a concave unpackaged cell.

16. The battery according to claim 10, wherein the first packaging film encloses a first groove used to accommodate the unpackaged cell, a shape of the first groove completely matches a shape of the unpackaged cell, and the second packaging film is a flat film layer.

17. The battery according to claim 10, wherein the first packaging film encloses a first groove, the second packaging film encloses a second groove, and the first groove and the second groove are aligned and closed to form the enclosed space.

18. The battery according to claim 10, wherein the first sealing part is formed by tightly fitting the first packaging film and the second packaging film.

19. The battery according to claim 10, wherein the first sealing part is formed by tightly fitting the first packaging film and the second packaging film and performing further hot-pressing.

20. The battery according to claim 5, wherein the unpackaged cell and the at least one first open space form a regular three-dimensional shape.

21. The battery according to claim 20, wherein the unpackaged cell and the at least one first open space form a cuboid or a cylinder.

22. The battery according to claim 5, wherein there is further one or more third open spaces in the unpackaged cell, the third open space runs through the thickness direction of the unpackaged cell, there is no unpackaged cell in the third open space, the packaging film forms a second sealing part in the third open space, the second sealing part does not cover the unpackaged cell, the second sealing part covers a part or all of the third open space, and the second sealing part encloses a fourth open space with a packaging film on a sidewall of the third open space.

23. The battery according to claim 22, wherein the packaging film comprises a first packaging film and a second packaging film, and the second sealing part is formed by tightly fitting the first packaging film and the second packaging film.

24. The battery according to claim 22, wherein the packaging film comprises a first packaging film and a second packaging film, and the second sealing part is formed by tightly fitting the first packaging film and the second packaging film and performing further hot-pressing.

25. The battery according to claim 5, wherein the unpackaged cell is a laminated cell or a winding cell.

26. The battery according to claim 5, wherein the unpackaged cell further comprises a pair of tabs disposed on a same side of the unpackaged cell, and the tabs are partly exposed on the packaging film.

27. The battery according to claim 22, wherein the tabs are located on a side edge of the unpackaged cell on which the first open space is provided.

28. The battery according to claim 22, wherein the tabs are located on a side edge of the unpackaged cell on which the first open space is not provided.

29. A terminal, comprising a housing, and a display module, an electronic component module, and a battery that are accommodated in the housing, wherein the battery supplies power to the display module and the electronic component module, and the battery is the battery according to any one of claims 5 to 28.

30. The terminal according to claim 29, wherein an electronic component is disposed in the second open space.
